# EUROPEAN PATENT APPLICATION

(11) **EP 4 344 219 A1**
(43) Date of publication of application: **27.03.2024**
(21) Application number: 22804322.0
(22) Date of filing: 08.03.2022
(51) Int. Cl.: H04N 21/2662, H04N 21/24, H04W 28/06

(54) **INFORMATION PROCESSING DEVICE AND INFORMATION PROCESSING METHOD**

(30) Priority: 18.05.2021 JP 2021083676
(71) Applicant: Sony Group Corporation, Tokyo 108-0075 (JP)
(72) Inventor: INUI, Tasuku, Tokyo 108-0075 (JP); HORIUCHI, Kohta, Tokyo 108-0075 (JP); AOAI, Shosuke, Tokyo 108-0075 (JP)
(74) Representative: D Young & Co LLP
(86) International application number: PCT/JP2022/010098
(87) International publication number: WO 2022/244402

(57) **Abstract**

An information processing device includes: a discerning unit that performs discerning related to wireless communication used for transmission of content based on action schedule information related to generation of the content and service area information regarding the wireless communication; and a determination unit that determines a form of the content based on a result of the discerning.

## Description

### Field

The present disclosure relates to an information processing device and an information processing method.

### Background

With rapid progress of wireless communication technologies, information processing devices compatible to a plurality of radio access technologies have emerged. For example, in recent years, communication devices compatible with both 4G and 5G have emerged.

### Citation List

### Patent Literature

Patent Literature 1: JP 2018-026626 A

### Summary

### Technical Problem

There may be a situation where pieces of content need to be transmitted as soon as possible at a place outside the office. In this case, transmission of the content is desirably performed by using a wireless network capable of high-speed communication, such as a 5G network, for example. However, the place outside the office is not always an accessible area (service area) of the wireless network. In some places, the user has no choice but to use a low-speed wireless network, which is inconvenient.

In view of this, the present disclosure proposes an information processing device and an information processing method with high convenience.

Note that the above problem or target is merely one of a plurality of problems or targets that can be solved or achieved by a plurality of embodiments disclosed in the present specification.

### Solution to Problem

In order to solve the above problem, an information processing device according to one embodiment of the present disclosure includes: a discerning unit that performs discerning related to wireless communication used for transmission of content based on action schedule information related to generation of the content and service area information regarding the wireless communication; and a determination unit that determines a form of the content based on a result of the discerning.

### Brief Description of Drawings

FIG. 1 is a diagram illustrating a state of recording action schedule information in an imaging device.
FIG. 2 is a diagram illustrating a state of transmitting video data to a broadcast station.
FIG. 3 is a diagram illustrating a configuration example of an imaging system according to an embodiment of the present disclosure.
FIG. 4 is a diagram illustrating a configuration example of a server according to the embodiment of the present disclosure.
FIG. 5 is a diagram illustrating a configuration example of an editing device according to the embodiment of the present disclosure.
FIG. 6 is a diagram illustrating a configuration example of an imaging device according to the embodiment of the present disclosure.
FIG. 7 is a diagram illustrating a configuration example of a terminal device according to the embodiment of the present disclosure.
FIG. 8 is a diagram illustrating an example of a service area map.
FIG. 9 is a flowchart illustrating content transmission processing according to a first example.
FIG. 10 is a diagram illustrating a content form that can be used for the setting.
FIG. 11 is a diagram illustrating an example of a service area map.
FIG. 12 is a flowchart illustrating content transmission processing according to a second example.

### Description of Embodiments

Embodiments of the present disclosure will be described below in detail with reference to the drawings. Note that, in each of the following embodiments, the same parts are denoted by the same reference symbols, and a repetitive description thereof will be omitted.

One or more embodiments (implementation examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

The present disclosure will be described in the following order.
1. Overview
2. Configuration of imaging system
   2-1. Configuration of server
   2-2. Configuration of editing device
   2-3. Configuration of imaging device
   2-4. Configuration of terminal device
3. First example (example using news gathering plan information)
4. Second example (example using news gathering route information)
5. Modification
6. Conclusion

### <<1. Overview>>

There may be a situation in which pieces of content need to be transmitted wirelessly at a place outside the office. For example, there may be a situation in which a news gathering crew of a broadcast station needs to promptly transmit a video related to the news gathering from a news gathering location to the broadcast station. In this case, it is desirable to perform content transmission using a wireless network (for example, a 5G network) capable of high-speed communication. However, the place outside the office is not always an accessible area (service area) of the wireless network. Therefore, depending on a location, there is no choice but to use a low-speed wireless network for content transmission. In some cases, this leads to an inconvenient situation in which transmission of the content cannot be made in time.

Therefore, in the present embodiment, the information processing device converts the form of the content related to transmission in accordance with the accessible wireless network. For example, when an accessible wireless network is capable of high-speed communication, content is converted into a form with a large data amount (for example, video data with a high bit rate). In contrast, when the accessible wireless network is not capable of high-speed communication, the content is converted into a form with a small data amount (for example, video data with a low bit rate).

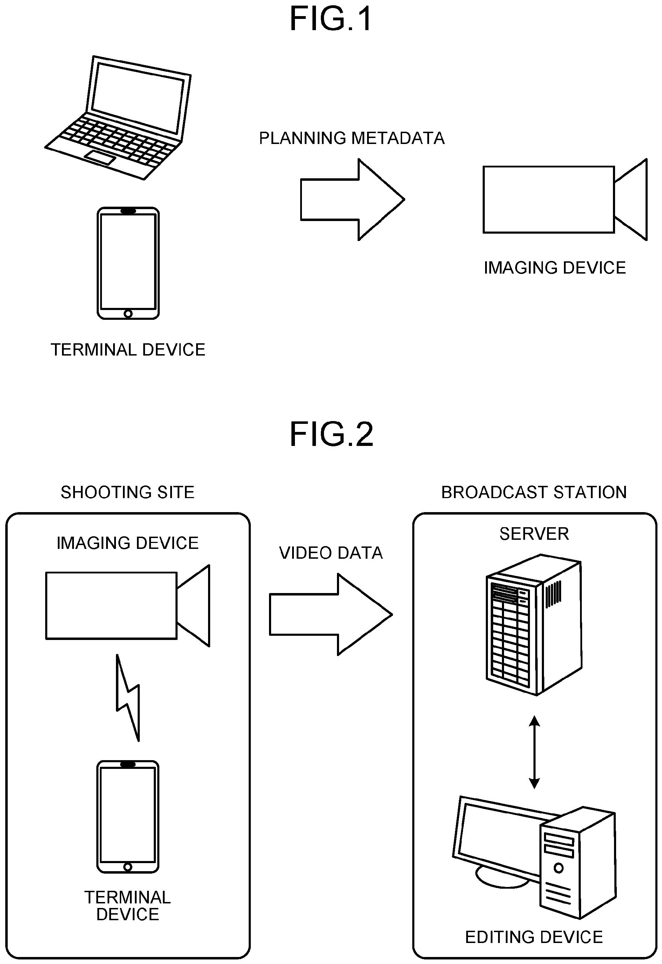

Here is a more specific assumable case where a news gathering crew of a broadcast station transmits video data from a shooting site to the broadcast station. In this example, the information processing device that transmits the content is an imaging device (camcorder). The news gathering crew records the action schedule information related to the news gathering in the imaging device before the news gathering. FIG. 1 is a diagram illustrating a state in which action schedule information is recorded in an imaging device. An example of the action schedule information is news gathering plan information containing recorded information regarding the location and the time related to the news gathering. At this time, the news gathering plan information may be planning metadata. The planning metadata is described as an extensible markup language (XML) sentence, for example. The following is an example of the news gathering plan information.
TIME: 14:00-16:00,
LOCATION: 35.63124396220876, 139.74364418325854

Although the above example uses latitude and longitude information for the location information, the location information need not necessarily be latitude and longitude information.

The news gathering crew heads to the shooting site and performs shooting. When the shooting is completed, the news gathering crew transmits video data to a server located in the broadcast station. FIG. 2 is a diagram illustrating a state of transmitting video data to a broadcast station. At this time, the imaging device discerns a wireless network to be used for transmission of the video data from among the plurality of wireless networks based on location information recorded in the news gathering plan information and based on service area information of wireless communication. At this time, the plurality of wireless networks may include a 5G (millimeter wave) network, a 5G (sub-6) network, and a 4G network. The service area information may be a service area map.

Subsequently, the imaging device determines the form of the content based on the information of the network discerned. For example, in a case where the current position is in an area where a 5G (millimeter wave) network is accessible, extremely high-speed communication is possible, and thus, the imaging device sets the form of the video data as video data of a bit rate higher than a first bit rate. In a case where the current position is in an area where a 5G (millimeter wave) network is not accessible but a 5G (sub-6) network is accessible, high-speed communication can be performed to some extent, and thus, the imaging device sets the form of the video data as video data of a bit rate lower than the first bit rate and higher than a second bit rate. Here, the second bit rate is lower than the first bit rate. In other cases, since high-speed communication cannot be expected, the imaging device sets the form of the video data to video data of a bit rate lower than the second bit rate. The imaging device transmits the converted video data to the server of the broadcast station.

Since the imaging device converts the content into a form suitable for the accessible wireless network, the user can transmit the content without caring about the service area of the wireless network.

The outline of the present embodiment has been described above. Hereinafter, an imaging system 1 according to the present embodiment will be described in detail.

### <<2. Configuration of imaging system>>

First, a configuration of the imaging system 1 will be described.

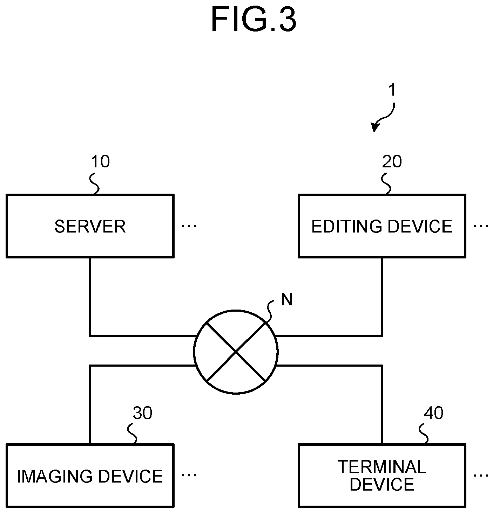

FIG. 3 is a diagram illustrating a configuration example of the imaging system 1 according to an embodiment of the present disclosure. The imaging system 1 is a system for a user to transmit content from a place outside the office to a predetermined device in a remote place by using a wireless network. For example, the imaging system 1 is a system for a user to transmit shooting data from a news gathering destination to a server in a broadcast station by using a cellular network.

The imaging system 1 includes a server 10, an editing device 20, an imaging device 30, and a terminal device 40. The device in the figure may be considered as a device in a logical sense. That is, parts of the device in the drawing may be partially actualized by a virtual machine (VM), a container, a docker, or the like, and they may be implemented on physically the same piece of hardware.

The server 10, the editing device 20, the imaging device 30, and the terminal device 40 each have a communication function and are connected to each other via a network N. The server 10, the editing device 20, the imaging device 30, and the terminal device 40 can be rephrased as communication devices. Although only one network N is illustrated in the example of FIG. 3, the network N may be provided in plurality.

Here, examples of the network N include communication networks such as a local area network (LAN), a wide area network (WAN), a cellular network, a fixed-line telephone network, a regional Internet protocol (IP) network, and the Internet. The network N may include a wired network or a wireless network. In addition, the network N may include a core network. Examples of the core network include an Evolved Packet Core (EPC) or a 5G Core network (5GC). In addition, the network N may include a data network other than the core network. The data network may be a service network of a telecommunications carrier, for example, an IP Multimedia Subsystem (IMS) network. Furthermore, the data network may be a private network such as an intranet.

The communication devices such as the server 10, the editing device 20, the imaging device 30, and the terminal device 40 may be configured to be connected to the network N or other communication devices by using a radio access technology (RAT) such as long term evolution (LTE), New Radio (NR), Wi-Fi, or Bluetooth (registered trademark). At this time, the communication device may be configured to be able to use different types of radio access technologies. For example, the communication device may be configured to be able to use NR and Wi-Fi. Furthermore, the communication device may be configured to be able to use different types of cellular communication technology (for example, LTE and NR) . LTE and NR are a type of cellular communication technology, and enable mobile communication of communication devices by using cellular arrangement of a plurality of areas covered by base stations.

In the following, it is assumed that "LTE" includes LTE-advanced (LTE-A), LTE-advanced pro (LTE-A Pro), and evolved universal terrestrial radio access (EUTRA). In addition, it is assumed that NR includes new radio access technology (NRAT) and further EUTRA (FEUTRA). A single base station may manage a plurality of cells. In the following, a cell corresponding to LTE may be referred to as an LTE cell, and a cell corresponding to NR may be referred to as an NR cell.

NR is the next generation (fifth generation) radio access technology subsequent to LTE (fourth generation communication including LTE-Advanced and LTE-Advanced Pro). The NR is a radio access technology that can support various use cases including enhanced mobile broadband (eMBB), massive machine type communications (mMTC), and Ultra-Reliable and Low Latency Communications (URLLC). NR is being studied with the aim of creating a technical framework that supports use scenarios, requirements, and deployment scenarios for these use cases.

The communication devices such as the server 10, the editing device 20, the imaging device 30, and the terminal device 40 may be connectable to the network N or other communication devices by using a radio access technology other than LTE, NR, Wi-Fi, and Bluetooth. For example, the communication device may be connectable to the network N or other communication devices by using Low Power Wide Area (LPWA) communication. Furthermore, the communication device may be connectable to the network N or other communication devices by using wireless communication of a proprietary standard. Obviously, the communication device may be connectable to the network N or other communication devices by using wireless communication of other known standards.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. Note that the LPWA communication used by the communication devices such as the imaging device 30 and the terminal device 40 may be communication conforming to the LPWA standard. Examples of the LPWA standard include ELTRES, ZETA, SIGFOX, LoRaWAN, and NB-Iot. Needless to say, the LPWA standard is not to be limited thereto, and may be other LPWA standards.

Note that the plurality of communication channels may include a virtual network. For example, the plurality of communication channels connectable by the communication device may include a virtual network such as a virtual local area network (VLAN) and a physical network such as an IP communication channel. In this case, the terminal device 40 may perform route control based on a route control protocol such as Open Shortest Path First (OSPF) or Border Gateway Protocol (BGP).

In addition, the plurality of communication channels may include one or a plurality of overlay networks or one or a plurality of network slicing sets.

Hereinafter, configurations of individual devices included in the imaging system 1 will be specifically described. The configuration of each device illustrated below is just an example. The configuration of each device may differ from the configuration below.

### <2-1. Configuration of server>

First, a configuration of the server 10 will be described.

The server 10 is an information processing device (computer) that records shooting data transmitted from the imaging device 30 or the terminal device 40 via the network N. The server 10 can be implemented by employing any form of computer. For example, the server 10 is an application server or a web server. The server 10 may be a PC server, a midrange server, or a mainframe server. Furthermore, the server 10 may be an information processing device that performs data processing (edge processing) near the user or the terminal. For example, the information processing device may be an information processing device (computer) provided close to or built in a base station or a roadside unit. The server 10 may naturally be an information processing device that performs cloud computing.

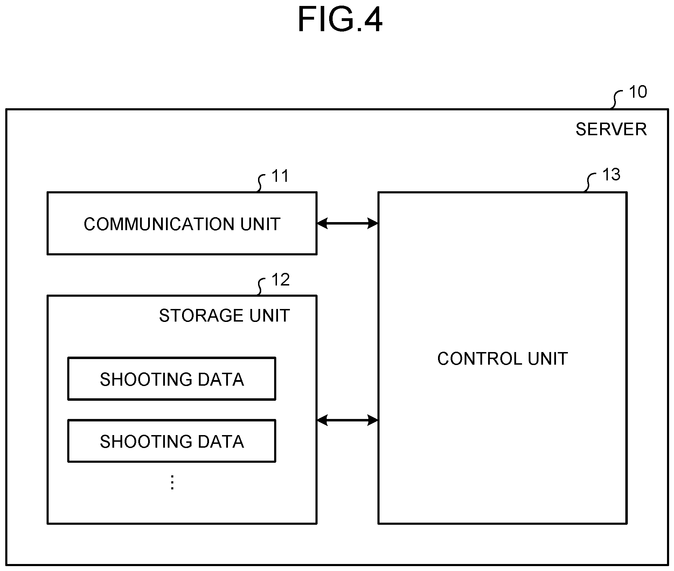

FIG. 4 is a diagram illustrating a configuration example of the server 10 according to the embodiment of the present disclosure. The server 10 includes a communication unit 11, a storage unit 12, and a control unit 13. Note that the configuration illustrated in FIG. 4 is a functional configuration, and the hardware configuration may be different from this. Furthermore, the functions of the server 10 may be installed in a distributed manner in a plurality of physically separated configurations. For example, the server 10 may be constituted with a plurality of server devices.

The communication unit 11 is a communication interface for communicating with other devices. An example of the communication unit 11 is a local area network (LAN) interface such as a Network Interface Card (NIC). The communication unit 11 may be a wired interface, or may be a wireless interface. Under the control of the control unit 13, the communication unit 11 communicates with devices such as the editing device 20, the imaging device 30, the terminal device 40.

The storage unit 12 is a data readable/writable storage device such as dynamic random access memory (DRAM), static random access memory (SR_AM), a flash drive, or a hard disk. The storage unit 12 functions as a storage means of the server 10. The storage unit 12 stores shooting data transmitted from the imaging device 30, for example.

The control unit 13 is a controller that controls individual units of the server 10. The control unit 13 is implemented by a processor such as a central processing unit (CPU), a micro processing unit (MPU), or a graphics processing unit (GPU), for example. For example, the control unit 13 is implemented by execution of various programs stored in the storage device inside the server 10 by the processor using random access memory (RAM) or the like as a work area. Note that the control unit 13 may be implemented by an integrated circuit such as an application specific integrated circuit (ASIC) or a field programmable gate array (FPGA). The CPU, MPU, GPU, ASIC, and FPGA can all be regarded as controllers.

### <2-2. Configuration of editing device>

Next, a configuration of the editing device 20 will be described.

The editing device 20 is a device for editing shooting data. The server 10 can be implemented by employing any form of computer. For example, the editing device 20 may be a device dedicated to video editing or a personal computer.

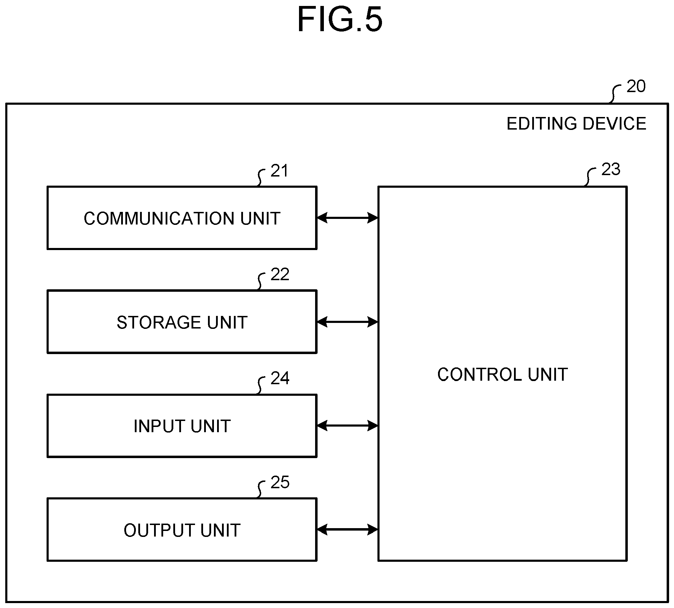

FIG. 5 is a diagram illustrating a configuration example of the editing device 20 according to the embodiment of the present disclosure. The editing device 20 includes a communication unit 21, a storage unit 22, a control unit 23, an input unit 24, and an output unit 25. The configuration illustrated in FIG. 5 is a functional configuration, and the hardware configuration may be different from this. Furthermore, the functions of the editing device 20 may be installed in a distributed manner in a plurality of physically separated configurations.

The communication unit 21 is a communication interface for communicating with other devices. For example, the communication unit 21 is a LAN interface such as an NIC. The communication unit 21 may be a wired interface, or may be a wireless interface.

The storage unit 22 is a data readable/writable storage device such as DRAM, SRAM, a flash drive, and a hard disk. The storage unit 22 functions as a storage means in the editing device 20.

The control unit 23 is a controller that controls individual parts of the editing device 20. The control unit 23 is actualized by a processor such as a CPU, an MPU, and a GPU, for example. For example, the control unit 23 is implemented by a processor executing various programs stored in a storage device inside the editing device 20 using RAM or the like as a work area. Note that the control unit 23 may be actualized by an integrated circuit such as an ASIC or an FPGA. The CPU, MPU, GPU, ASIC, and FPGA can all be regarded as controllers.

The input unit 24 is an input device that receives various inputs from the outside. For example, the input unit 24 is an operation device such as a keyboard, a mouse, and operation keys used by a user to perform various operations.

The output unit 25 is a device that performs various outputs such as sound, light, vibration, and an image to the outside. The output unit 25 performs various outputs to the user under the control of the control unit 23.

### <2-3. Configuration of imaging device>

Next, a configuration of the imaging device 30 will be described.

The imaging device 30 is a terminal device having a wireless communication function and an imaging function. For example, the imaging device 30 is an imaging device (for example, a camcorder) having a communication function. At this time, the imaging device 30 may be a business camera having a wireless communication function or a personal camera. The imaging device 30 is a type of communication device. The imaging device 30 transmits the shooting data to the server 10 via a wireless network (for example, a cellular network).

The imaging device 30 may be able to perform LPWA communication with other communication devices. In addition, wireless communication used by the imaging device 30 may be wireless communication using millimeter waves. The wireless communication used by the imaging device 30 may be wireless communication using radio waves or wireless communication (optical wireless communication) using infrared rays or visible light.

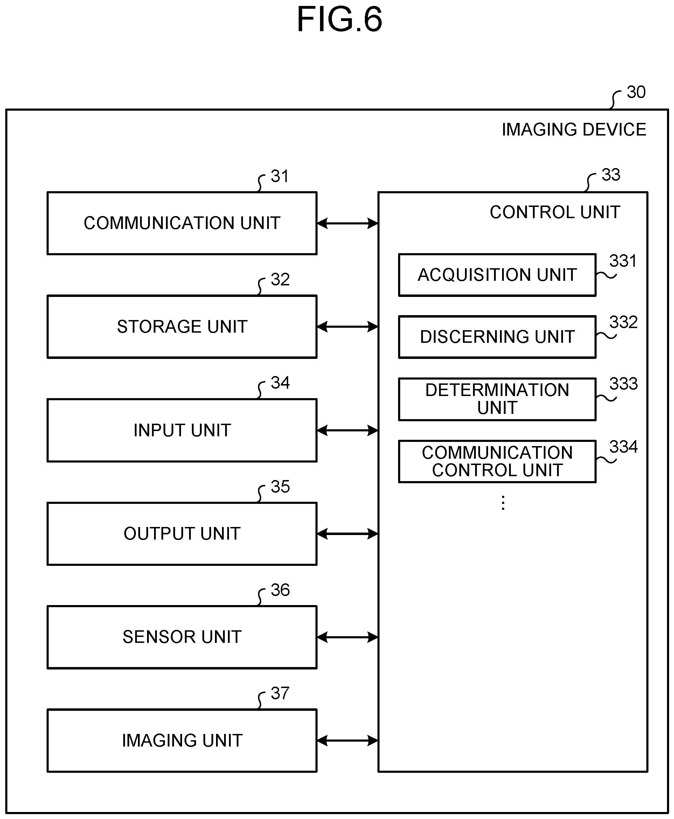

FIG. 6 is a diagram illustrating a configuration example of the imaging device 30 according to the embodiment of the present disclosure. The imaging device 30 includes a communication unit 31, a storage unit 32, a control unit 33, an input unit 34, an output unit 35, a sensor unit 36, and an imaging unit 37. Note that the configuration illustrated in FIG. 6 is a functional configuration, and the hardware configuration may be different from this. Furthermore, the functions of the imaging device 30 may be installed in a distributed manner in a plurality of physically separated configurations.

The communication unit 31 is a communication interface for communicating with other devices. For example, the communication unit 31 is a LAN interface such as an NIC. The communication unit 31 may be a wired interface, or may be a wireless interface.

In a case where the communication unit 31 includes a wireless interface, the communication unit 31 may be configured to connect to the network N using a radio access technology such as LTE, NR, Wi-Fi, or Bluetooth (registered trademark). At this time, the communication device may be configured to be able to use different types of radio access technologies. For example, the communication device may be configured to be able to use NR and Wi-Fi. Furthermore, the communication device may be configured to be able to use different types of cellular communication technology (for example, LTE and NR). Note that the imaging device 30 may be connectable to the network N using a radio access technology other than LTE, NR, Wi-Fi, or Bluetooth.

The storage unit 32 is a data readable/writable storage device such as DRAM, SRAM, a flash drive, and a hard disk. The storage unit 32 functions as a storage means in the imaging device 30. The storage unit 32 stores shooting data (for example, image data or metadata) captured by the imaging unit 37. Note that the shooting data may be provided in a file format.

The control unit 33 is a controller that controls individual parts of the imaging device 30. The control unit 33 is actualized by a processor such as a CPU, an MPU, and a GPU, for example. For example, the control unit 33 is implemented by a processor executing various programs stored in a storage device inside the imaging device 30 using RAM or the like as a work area. Note that the control unit 33 may be implemented by an integrated circuit such as an ASIC or an FPGA. The CPU, MPU, GPU, ASIC, and FPGA can all be regarded as controllers.

The control unit 33 includes an acquisition unit 331, a discerning unit 332, a determination unit 333, and a communication control unit 334. Individual blocks (acquisition unit 331 to communication control unit 334) constituting the control unit 33 are functional blocks individually indicating functions of the control unit 33. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 33 may be configured in a functional unit different from the above-described functional block. The functional block may be configured by using any method. The operation of these functional blocks will be described below. In addition, some or all of the operations of these functional blocks may be executed by another device (for example, the server 10 or the terminal device 40).

The input unit 34 is an input device that receives various inputs from the outside. For example, the input unit 34 is an operation device for the user to perform various operations, including devices such as a keyboard, a mouse, and operation keys. In a case where a touch panel is adopted as the imaging device 30, the touch panel is also included in the input unit 34. In this case, the user performs various operations by touching the screen with a finger or a stylus.

The output unit 35 is a device that performs various outputs such as sound, light, vibration, and an image to the outside. The output unit 35 performs various outputs to the user under the control of the control unit 33. Note that the output unit 35 includes a display device that displays various types of information. Examples of the display device include a liquid crystal display and an organic electro-luminescence (EL) display (also referred to as an organic light emitting diode (OLED) display). Note that the output unit 35 may be a touch panel type display device. In this case, the output unit 35 may be regarded as a configuration integrated with the input unit 34.

The sensor unit 36 is a sensor that acquires information related to the position or attitude of the imaging device 30. For example, the sensor unit 36 is a global navigation satellite system (GNSS) sensor. Here, the GNSS sensor may be a global positioning system (GPS) sensor, a GLONASS sensor, a Galileo sensor, or a quasi-zenith satellite system (QZSS) sensor. The GNSS sensor can be rephrased as a GNSS receiving module. Note that the sensor unit 36 is not limited to the GNSS sensor, and may be an acceleration sensor, for example. Furthermore, the sensor unit 36 may be an inertial measurement unit (IMU) or a geomagnetic sensor. Furthermore, the sensor unit 36 may be a combination of a plurality of the sensors.

The imaging unit 37 is a converter that converts an optical image into an electric signal. The imaging unit 37 includes components such as an image sensor and a signal processing circuit that processes an analog pixel signal output from the image sensor, for example, and converts light entering through the lens into digital data (image data). Note that the image captured by the imaging unit 37 is not limited to a video (moving image), and may be a still image. Note that the imaging unit 37 can be rephrased as a camera.

### <2-4. Configuration of terminal device>

Next, a functional configuration of the terminal device 40 will be described.

The terminal device 40 is a user terminal possessed by a user who goes outside the office for news gathering or the like. For example, the terminal device 40 is a mobile terminal such as a mobile phone, a smart device (smartphone or tablet), a personal digital assistant (PDA), or a laptop PC. The terminal device 40 may be a wearable device such as a smart watch. The terminal device 40 may be an xR device such as an augmented reality (AR) device, a virtual reality (VR) device, or a mixed reality (MR) device. At this time, the xR device may be an eyeglass-type device such as AR glasses or MR glasses, or may be a head-mounted device such as a VR head-mounted display. The terminal device 40 may be a portable Internet of Things (IoT) device. The terminal device 40 may be a motorcycle, a moving relay vehicle, or the like, equipped with a communication device such as the field pickup unit (FPU). The terminal device 40 may be a machine to machine (M2M) device or an Internet of Things (IoT) device.

Furthermore, the terminal device 40 may be able to perform LPWA communication with other communication devices (such as a base station, an access point, and an imaging device 30, for example). In addition, the wireless communication used by the terminal device 40 may be wireless communication using millimeter waves. The wireless communication used by the terminal device 40 may be wireless communication using radio waves or wireless communication (optical wireless communication) using infrared rays or visible light.

Furthermore, the terminal device 40 may be a mobile device. The mobile device is a movable wireless communication device. At this time, the terminal device 40 may be a wireless communication device installed on a mobile body, or may be the mobile body itself. For example, the terminal device 40 may be a vehicle that moves on a road, such as an automobile, a bus, a truck, or a motorbike, or may be a wireless communication device mounted on the vehicle. The mobile body may be a mobile terminal, or may be a mobile body that moves on land, in the ground, on water, or under water. Furthermore, the mobile body may be a mobile body that moves inside the atmosphere, such as a drone or a helicopter, or may be a mobile body that moves outside the atmosphere, such as an artificial satellite.

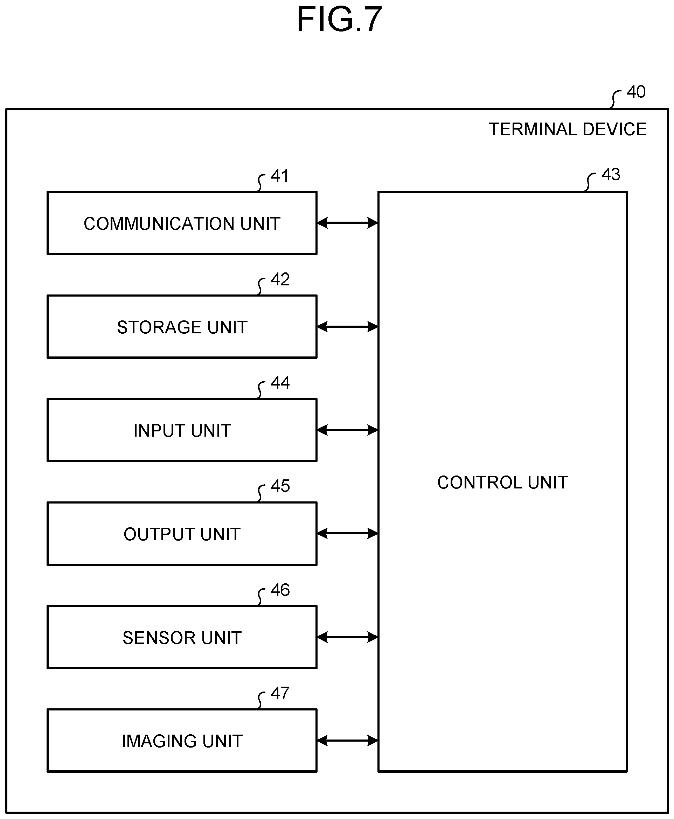

FIG. 7 is a diagram illustrating a configuration example of the terminal device 40 according to the embodiment of the present disclosure. The terminal device 40 includes a communication unit 41, a storage unit 42, a control unit 43, an input unit 44, an output unit 45, a sensor unit 46, and an imaging unit 47. Note that the configuration illustrated in FIG. 7 is a functional configuration, and the hardware configuration may be different from this. Furthermore, the functions of the terminal device 40 may be implemented in a distributed manner in a plurality of physically separated configurations.

The communication unit 41 is a communication interface for communicating with other devices. For example, the communication unit 41 is a LAN interface such as an NIC. The communication unit 41 may be a wired interface, or may be a wireless interface.

In a case where the communication unit 41 includes a wireless interface, the communication unit 41 may be configured to connect to the network N using a radio access technology such as LTE, NR, Wi-Fi, or Bluetooth (registered trademark). At this time, the communication device may be configured to be able to use different types of radio access technologies. For example, the communication device may be configured to be able to use NR and Wi-Fi. Furthermore, the communication device may be configured to be able to use different types of cellular communication technology (for example, LTE and NR). Note that the terminal device 40 may be connectable to the network N using a radio access technology other than LTE, NR, Wi-Fi, or Bluetooth.

The storage unit 42 is a data readable/writable storage device such as DRAM, SRAM, a flash drive, and a hard disk. The storage unit 42 functions as a storage means in the terminal device 40.

The control unit 43 is a controller that controls individual parts of the terminal device 40. The control unit 43 is actualized by a processor such as a CPU, an MPU, and a GPU, for example. For example, the control unit 43 is implemented by a processor executing various programs stored in a storage device inside the terminal device 40 using RAM or the like as a work area. Note that the control unit 43 may be actualized by an integrated circuit such as an ASIC or an FPGA. The CPU, MPU, GPU, ASIC, and FPGA can all be regarded as controllers.

The input unit 44 is an input device that receives various inputs from the outside. For example, the input unit 44 is an operation device for the user to perform various operations, including devices such as a keyboard, a mouse, and operation keys. In a case where a touch panel is adopted as the terminal device 40, the touch panel is also included in the input unit 44. In this case, the user performs various operations by touching the screen with a finger or a stylus.

The output unit 45 is a device that performs various outputs such as sound, light, vibration, and an image to the outside. The output unit 45 performs various outputs to the user under the control of the control unit 43. The output unit 45 includes a display device that displays various types of information. The display device is a liquid crystal display or an organic EL display, for example. Note that the output unit 45 may be a touch panel type display device. In this case, the output unit 45 may be regarded as a configuration integrated with the input unit 44.

The sensor unit 46 is a sensor that acquires information related to the position or attitude of the terminal device 40. For example, the sensor unit 46 is a GNSS sensor. Note that the sensor unit 46 is not limited to the GNSS sensor, and may be an acceleration sensor, for example. Furthermore, the sensor unit 46 may be an IMU or a geomagnetic sensor. Furthermore, the sensor unit 46 may be a combination of a plurality of these sensors.

The imaging unit 47 is a converter that converts an optical image into an electric signal. Note that the image captured by the imaging unit 47 is not limited to a video (moving image), and may be a still image.

The configuration of the imaging system 1 has been described above. Next, the operation of the imaging system 1 having such a configuration will be described.

### <<3. First example (example using news gathering plan information)>>

First, a first example (an example using news gathering plan information) will be described.

The imaging device 30 according to the present embodiment discerns a network to be used for content transmission from among a plurality of networks corresponding to different radio access technologies based on action schedule information and service area information. Subsequently, the imaging device 30 determines the form of the content based on the information of the network discerned.

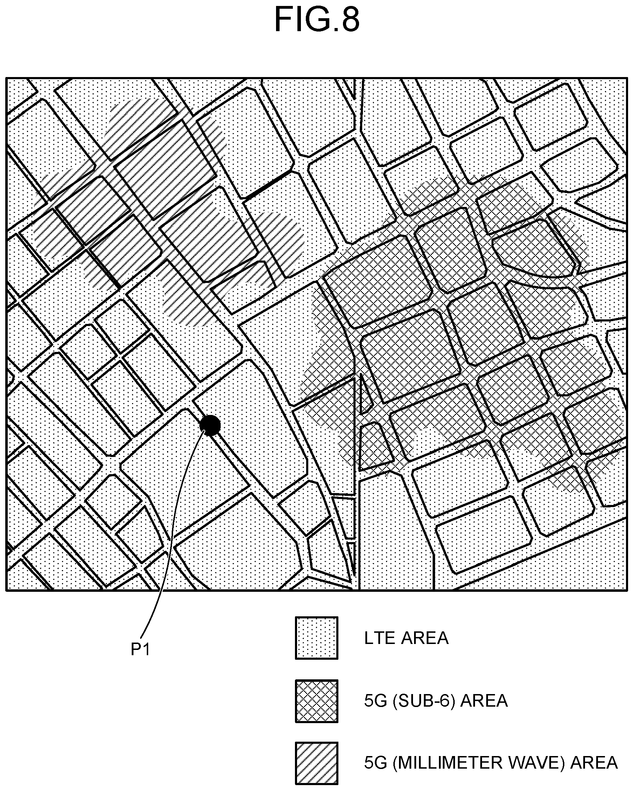

In the first example, the service area information is a service area map of a plurality of wireless networks. FIG. 8 is a diagram illustrating an example of a service area map. In the example of FIG. 8, the plurality of wireless networks includes an LTE network, a 5G (sub-6) network, and a 5G (millimeter wave) network. A 5G (millimeter wave) network can perform communication at a higher speed than a 5G (sub-6) network. In addition, a 5G (sub-6) network can perform communication at a higher speed than an LTE network.

Here, the LTE network is a wireless network using LTE as a radio access technology. The LTE network may be referred to as a 4G network. In addition, a 5G (sub-6) network is a wireless network using 5G as a radio access technology, and is a wireless network using a sub-6 band (for example, a band of 3.6 GHz to 6 GHz) as a frequency band. In addition, a 5G (millimeter wave) network is a wireless network using 5G as a radio access technology, and is a wireless network using a sub-6 band (for example, a band of 28 GHz to 300 GHz) as a frequency band.

In the first example, the action schedule information is news gathering plan information. The news gathering plan information is information as a record of a news gathering plan, and includes information regarding the location and the time related to news gathering. As described above, the news gathering plan information may be planning metadata. In the example of FIG. 8, a news gathering location P1 is a location related to news gathering. In the first example, the news gathering plan information includes records of information of the news gathering location P1 and information of the time of news gathering performed at the news gathering location P1. Note that the news gathering plan information may include information of a plurality of news gathering locations and times. Here, the news gathering location information recorded in the news gathering plan information may be longitude and latitude information.

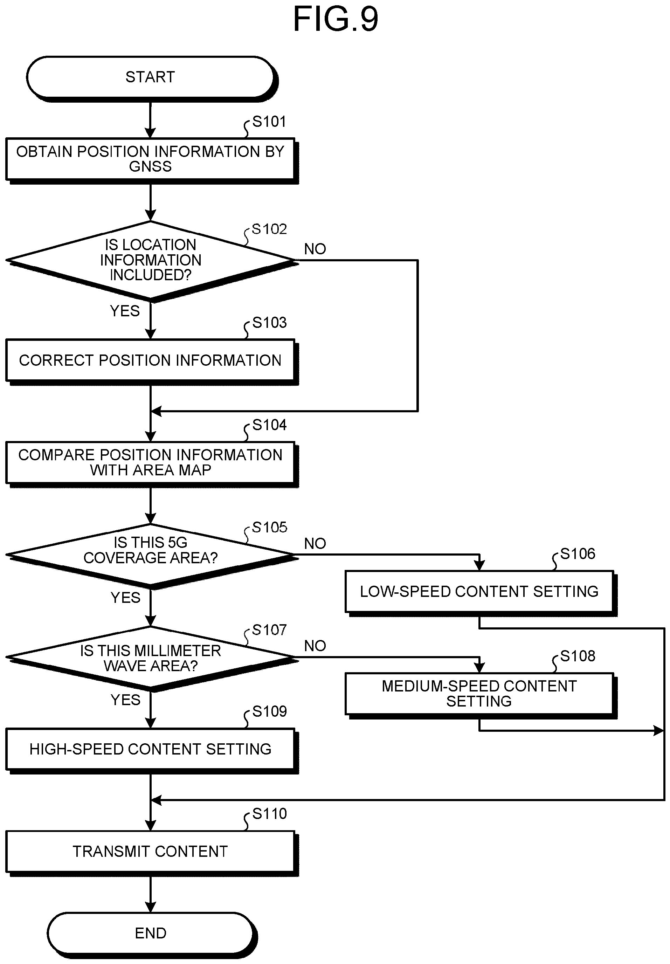

FIG. 9 is a flowchart illustrating content transmission processing according to the first example. The content transmission processing illustrated in FIG. 9 is executed by the control unit 33 of the imaging device 30. Hereinafter, the first example will be described with reference to FIG. 9.

First, the acquisition unit 331 of the imaging device 30 acquires current position information of the imaging device 30 detected by a GNSS sensor (for example, a GPS sensor) (step S101).

Next, the discerning unit 332 of the imaging device 30 discerns whether location information indicating the news gathering location is included in the news gathering plan information (step S102). In a case where the location information is not included in the news gathering plan information (step S102: No), the discerning unit 332 proceeds to the processing of step 104.

In a case where the location information is included in the news gathering plan information (step S102: No), the discerning unit 332 corrects the current position information acquired in step S101 based on the location information included in the news gathering plan information. For example, in a case where a plurality of pieces of news gathering location information (for example, longitude and latitude information) is included in the news gathering plan information, the discerning unit 332 sets, as the current position information, the information of the news gathering location closest to the current position acquired in step S101 among the plurality of pieces of news gathering location information (step S103). This configuration makes it possible for the imaging device 30 to acquire more accurate current position information than the current position information detected by the GNSS sensor.

Next, the discerning unit 332 compares the current position information acquired in step S101 or step S103 with the service area map (step S104). Subsequently, the discerning unit 332 discern a network used for transmission of the content (for example, video data related to news gathering).

When the current position is not in the 5G coverage area (step S105: No), the discerning unit 332 discerns that the wireless network used for transmission of the content is an LTE network. Subsequently, the determination unit 333 of the imaging device 30 determines the form of the content based on the information of the wireless network discerned. For example, when the content is a video, the determination unit 333 determines the form of the content from among a plurality of video forms having mutually different information amounts per unit time. Video forms conceivable as the plurality of video forms include low-speed, medium-speed, and high-speed video forms (content settings).

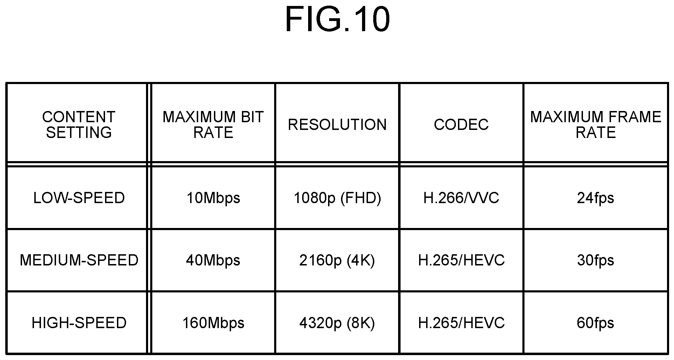

The low-speed, medium-speed, and high-speed video forms (content settings) can be defined as illustrated in FIG. 10, for example. FIG. 10 is a diagram illustrating a content form that can be used for the setting. The plurality of video forms includes a plurality of video formats in which at least one of maximum bit rates, resolutions, codecs, or maximum frame rates are different. The low-speed content setting (video setting) corresponds to a video format having a maximum bit rate of 10 Mbps, a resolution of 1080p (Full HD), a codec of H.266/VVC, and a maximum frame rate of 24 fps. The medium-speed content setting (video setting) corresponds to a video format having a maximum bit rate of 40 Mbps, a resolution of 2160p (4K), a codec of H.265/HEVC, and a maximum frame rate of 30 fps. The high-speed content setting (video setting) corresponds to a video format having a maximum bit rate of 160 Mbps, a resolution of 4320p (8K), a codec of H.265/HEVC, and a maximum frame rate of 60 fps.

In a case where the wireless network to be used is an LTE network, the determination unit 333 determines the content form so as to have a low-speed content form. Subsequently, the determination unit 333 performs setting for content generation based on the content form determined (step S106).

In a case where the current position is in a 5G coverage area (step S105: Yes), the discerning unit 332 discerns whether the current position is a 5G millimeter wave band area (step S107). In a case where the current position is not the 5G millimeter wave band area (step S107: No), the discerning unit 332 discerns that the wireless network to be used for content transmission is a 5G (sub-6) network. Subsequently, the determination unit 333 of the imaging device 30 determines the form of the content based on the information of the wireless network discerned. In a case where the wireless network to be used is a 5G (sub-6) network, the determination unit 333 determines the content form so as to have a medium-speed content form. Subsequently, the determination unit 333 performs setting for content generation based on the content form determined (step S108).

In a case where the current position is the 5G millimeter wave band area (step S107: Yes), the discerning unit 332 discerns that the wireless network to be used for content transmission is a 5G (millimeter wave) network. Subsequently, the determination unit 333 of the imaging device 30 determines the form of the content based on the information of the wireless network discerned. In a case where the wireless network to be used is a 5G (millimeter wave) network, the determination unit 333 determines the content form so as to have a high-speed content form. Subsequently, the determination unit 333 performs setting for content generation based on the content form determined (step S109).

The communication control unit 334 then generates content based on the content setting determined in step S106, step S108, or step S109, and transmits the generated content to the server 10 (step S110).

According to the present embodiment, the imaging device 30 can grasp an accurate current position based on the news gathering plan information, and can discern an accessible wireless network based on the accurate current position information. The imaging device 30 can determine the content form of the transmission content to be a form suitable for the wireless network to be used. As a result, the user can transmit content without caring about the service area of the wireless network.

### <<4. Second example (example using news gathering route information)>>

Next, a second example (an example using news gathering route information) will be described.

As described above, the imaging device 30 according to the present embodiment discerns a wireless network to be used for transmission of the content from among a plurality of networks corresponding to different radio access technologies based on the action schedule information and the service area information. The imaging device 30 then determines the form of the content based on the information of the wireless network discerned.

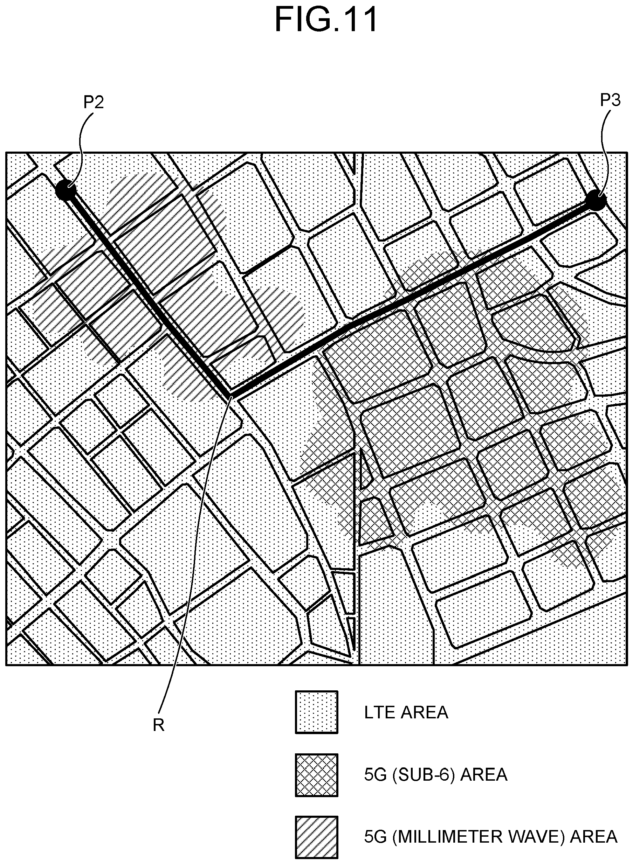

Also in the second example, the service area information is a service area map of a plurality of wireless networks. FIG. 11 is a diagram illustrating an example of a service area map. Also in the example of FIG. 11, the plurality of wireless networks includes an LTE network, a 5G (sub-6) network, and a 5G (millimeter wave) network.

In the second example, the action schedule information is news gathering route information. The news gathering route information is information including a record of a route related to news gathering. In the example of FIG. 11, a route R from a start location P2 to an end location P3 of the news gathering is assumed as a news gathering route recorded in the news gathering route information. At this time, the news gathering route information does not necessarily include time information.

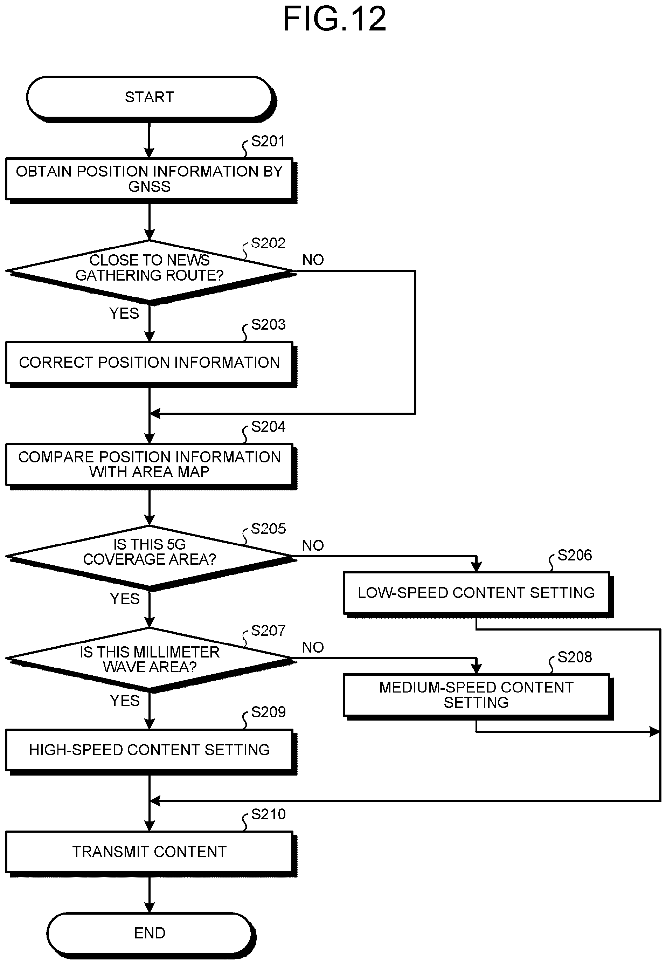

FIG. 12 is a flowchart illustrating content transmission processing according to the second example. The content transmission processing illustrated in FIG. 12 is executed by the control unit 33 of the imaging device 30. Hereinafter, the first example will be described with reference to FIG. 12.

First, the acquisition unit 331 of the imaging device 30 acquires current position information of the imaging device 30 detected by a GNSS sensor (for example, a GPS sensor) (step S201).

Next, the discerning unit 332 of the imaging device 30 discerns whether the current position is close to the news gathering route indicated in the news gathering route information (step S202). For example, the discerning unit 332 discerns whether the shortest distance from the current position to the news gathering route is within a predetermined distance. In a case where the current position is not close to the news gathering route (step S202: No), the discerning unit 332 proceeds to the processing of step 204.

In a case where the current position is close to the news gathering route (step S202: Yes), the discerning unit 332 corrects the current position information acquired in step S201 based on the news gathering route information. For example, the discerning unit 332 defines a point on the route R closest to the current position acquired in step S201 as the current position (step S203). This configuration makes it possible for the imaging device 30 to acquire more accurate current position information than the current position information detected by the GNSS sensor.

Next, the discerning unit 332 compares the current position information acquired in step S201 or step S203 with the service area map (step S204). Subsequently, the discerning unit 332 discern a network used for transmission of the content (for example, video data related to news gathering).

When the current position is not in the 5G coverage area (step S205: No), the discerning unit 332 discerns that the wireless network used for transmission of the content is an LTE network. Subsequently, the determination unit 333 of the imaging device 30 determines the form of the content based on the information of the wireless network discerned. For example, when the content is a video, the determination unit 333 determines the form of the content from among a plurality of video forms having mutually different information amounts per unit time (for example, low-speed, medium-speed, and high-speed content forms illustrated in FIG. 10). For example, in a case where the wireless network to be used is an LTE network, the determination unit 333 determines the content form so as to have a low-speed content form. Subsequently, the determination unit 333 performs setting for content generation based on the content form determined (step S206) .

In a case where the current position is in a 5G coverage area (step S205: Yes), the discerning unit 332 determines whether the current position is a 5G millimeter wave band area (step S207). In a case where the current position is not the 5G millimeter wave band area (step S207: No), the discerning unit 332 discerns that the wireless network to be used for content transmission is a 5G (sub-6) network. Subsequently, the determination unit 333 of the imaging device 30 determines the form of the content based on the information of the wireless network discerned. For example, in a case where the wireless network to be used is a 5G (sub-6) network, the determination unit 333 determines the content form so as to have a medium-speed content form. Subsequently, the determination unit 333 performs setting for content generation based on the content form determined (step S208) .

In a case where the current position is the 5G millimeter wave band area (step S207: Yes), the discerning unit 332 discerns that the wireless network to be used for content transmission is a 5G (millimeter wave) network. Subsequently, the determination unit 333 of the imaging device 30 determines the form of the content based on the information of the wireless network discerned. In a case where the wireless network to be used is a 5G (millimeter wave) network, the determination unit 333 determines the content form so as to have a high-speed content form. Subsequently, the determination unit 333 performs setting for content generation based on the content form determined (step S209).

The communication control unit 334 then generates content based on the content setting determined in step S206, step S208, or step S209, and transmits the generated content to the server 10 (step S210).

According to the present embodiment, the imaging device 30 can grasp an accurate current position based on the news gathering route information, and can discern an accessible wireless network based on the accurate current position information. The imaging device 30 can determine the content form of the transmission content to be a form suitable for the wireless network to be used. As a result, the user can transmit content without caring about the service area of the wireless network.

### <<5. Modification>>

The above-described embodiment is an example, and various modifications and applications are possible.

In the above-described embodiment (<3. First example>), the service area information is the service area map. Alternatively, the service area information may be action history information in normal situations, related to the use of a wireless network. At this time, the imaging device 30 may discern a wireless network to be used for content transmission based on the news gathering plan information and the action history information. Note that the imaging device 30 may discern the wireless network using not only the news gathering plan information and the action history information but also current position information obtained by the GNSS sensor.

Here, the action history information is information capable of specifying the place where at least one of a plurality of wireless networks has been used. For example, the action history information is information recorded as needed by the communication device such as the imaging device 30, including information (for example, longitude and latitude information) of a use location of a wireless network together with information of a type (for example, LTE, 5G (sub-6), or 5G (millimeter wave)) of the wireless network used for communication. Here, the action history information used by the communication device such as the imaging device 30 to discern the wireless network may be action history information recorded in the communication device or may be action history information of each of a plurality of communication devices aggregated in the server 10 or the like.

Furthermore, the imaging device 30 may preliminarily record the wireless network discerned in the news gathering plan information before the news gathering. The imaging device 30 may then determine the form of the content based on the information of the wireless network recorded in the news gathering plan information.

Furthermore, in the above-described embodiment (<4. Second example>), the service area information is the service area map. Alternatively, the service area information may be action history information in normal situations, related to the use of a wireless network. At this time, the imaging device 30 may discern a network to be used for content transmission based on the news gathering route information and the action history information. Note that the imaging device 30 may discern the wireless network using not only the news gathering plan information and the action history information but also current position information obtained by the GNSS sensor.

Furthermore, the imaging device 30 may preliminarily record the wireless network discerned in the news gathering route information before the news gathering. The imaging device 30 may determine the form of the content based on the information of the wireless network recorded in the news gathering route information.

Furthermore, in the above-described embodiment, the imaging device 30 determines the form of the content based on the information of the wireless network discerned. However, the imaging device 30 may determine the form of the content based on the information on the wireless network discerned and the information regarding the communication state of the wireless network. The information regarding the communication state is, for example, information regarding radio wave intensity or an effective transmission rate. For example, even in the case of a wireless network (5G (millimeter wave)) capable of high-speed communication, the imaging device 30 may set the content form to medium-speed content one level lower than high-speed content, instead of high-speed content in a case where the communication state falls below a predetermined standard.

Furthermore, in the above-described embodiment, the imaging device 30 determines the form of the content by discerning the wireless network used for content transmission. However, these processes may be performed by a device other than the imaging device 30, for example, the server 10 or the terminal device 40.

Furthermore, in the above-described embodiment, the content generated by the imaging device 30 is transmitted to the server 10 by the imaging device 30 itself. However, the content generated by the imaging device 30 may be transmitted to the server 10 by the terminal device 40. Incidentally, it is also possible to configure such that the terminal device 40 also performs content generation (including video shooting, for example).

Furthermore, in the above-described embodiment, the content is video, but the content is not limited to video content. For example, the content may be audio content.

The control device that controls the server 10, the editing device 20, the imaging device 30, and the terminal device 40 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control device. At this time, the control device may be a device (for example, a personal computer) outside the server 10, the editing device 20, imaging device 30, and the terminal device 40. Furthermore, the control device may be a device (for example, the control unit 13, the control unit 23, the control unit 33, or the control unit 43) inside the server 10, the editing device 20, the imaging device 30 or the terminal device 40.

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the portions other than the OS may be stored in a medium for distribution, or the portions other than the OS may be stored in a server device so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be arbitrarily altered unless otherwise specified. For example, a variety of information illustrated in each of the drawings are not limited to the information illustrated.

In addition, each of components of each device is provided as a functional and conceptional illustration and thus does not necessarily need to be physically configured as illustrated. That is, the specific form of distribution/integration of each of the devices is not limited to those illustrated in the drawings, and all or a part thereof may be functionally or physically distributed or integrated into arbitrary units according to various loads and use situations. This configuration by distribution and integration may be performed dynamically.

Furthermore, the above-described embodiments can be appropriately combined within a range implementable without contradiction of processing. Furthermore, the order of individual steps illustrated in the flowcharts of the above-described embodiment can be changed as appropriate.

Furthermore, for example, the present embodiment can be implemented as any configuration constituting a device or a system, for example, a processor as a large scale integration (LSI) or the like, a module using a plurality of processors or the like, a unit using a plurality of modules or the like, and a set obtained by further adding other functions to the unit, or the like (that is, a configuration of a part of the device).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a configuration of cloud computing in which one function is cooperatively shared and processed by a plurality of devices via a network.

### <<6. Conclusion>>

As described above, according to an embodiment of the present disclosure, the imaging device 30 performs discerning related to wireless communication used for content transmission based on the action schedule information and the wireless communication service area information, and then determines the form of the content based on the discerning result. As a result, the imaging device 30 can set the content form of the transmission content to a form suitable for the wireless network to be used. As a result, the user can transmit content without caring about the service area of the wireless network.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technique can also have the following configurations.
(1) An information processing device comprising:
   a discerning unit that performs discerning related to wireless communication used for transmission of content based on action schedule information related to generation of the content and service area information regarding the wireless communication; and
   a determination unit that determines a form of the content based on a result of the discerning.
(2) The information processing device according to (1),
   wherein the discerning unit discerns a network to be used for transmission of the content from among a plurality of networks corresponding to mutually different radio access technologies based on the action schedule information and the service area information, and
   the determination unit determines the form of the content based on information regarding the network discerned.
(3) The information processing device according to (2),
   wherein the determination unit determines the form of the content based on the information regarding the network discerned and information regarding a communication state of the network.
(4) The information processing device according to (2) or (3),
   wherein the action schedule information is news gathering plan information including information regarding a location and time related to news gathering, and
   the discerning unit discerns the network to be used for transmission of the content based on the news gathering plan information and the service area information.
(5) The information processing device according to (4),
   wherein the service area information is a service area map of the plurality of networks,
   the discerning unit discerns the network to be used for transmission of the content based on the news gathering plan information and the service area map, and
   the determination unit determines the form of the content based on the information regarding the network discerned.
(6) The information processing device according to (5),
   wherein the discerning unit discerns the network to be used for transmission of the content based on the news gathering plan information, the service area map, and current position information obtained by a global navigation satellite system (GNSS) sensor.
(7) The information processing device according to (5) or (6),
   wherein the discerning unit, before the news gathering, discerns the network to be used for transmission of the content based on the news gathering plan information and the service area map and records the network discerned in the news gathering plan information, and
   the determination unit determines the form of the content based on the information of the network recorded in the news gathering plan information.
(8) The information processing device according to (4),
   wherein the service area information is action history information capable of specifying a place where at least one of the plurality of networks has been used,
   the discerning unit discerns the network to be used for transmission of the content based on the news gathering plan information and the action history information, and
   the determination unit determines the form of the content based on the information regarding the network discerned.
(9) The information processing device according to (8),
   wherein the discerning unit, before the news gathering, discerns the network to be used for transmission of the content based on the news gathering plan information and the action history information and records the network discerned in the news gathering plan information, and
   the determination unit determines the form of the content based on the information of the network recorded in the news gathering plan information.
(10) The information processing device according to (2),
   the action schedule information is news gathering route information including information regarding a route related to news gathering, and
   the discerning unit discerns the network to be used for transmission of the content based on the news gathering route information and the service area information.
(11) The information processing device according to (10),
   wherein the service area information is a service area map of the plurality of networks,
   the discerning unit discerns the network to be used for transmission of the content based on the news gathering route information and the service area map, and
   the determination unit determines the form of the content based on the information regarding the network discerned.
(12) The information processing device according to (11),
   wherein the discerning unit discerns the network to be used for transmission of the content based on the news gathering route information, the service area map, and current position information obtained by a global navigation satellite system (GNSS) sensor.
(13) The information processing device according to (11) or (12),
   wherein the discerning unit, before the news gathering, discerns the network to be used for transmission of the content based on the news gathering route information and the service area map and records the network discerned in the news gathering route information, and
   the determination unit determines the form of the content based on the information of the network recorded in the news gathering route information.
(14) The information processing device according to (10),
   wherein the service area information is action history information capable of specifying a place where at least one of the plurality of networks has been used,
   the discerning unit discerns the network to be used for transmission of the content based on the news gathering route information and the action history information, and
   the determination unit determines the form of the content based on the information regarding the network discerned.
(15) The information processing device according to (14),
   wherein the discerning unit, before the news gathering, discerns the network to be used for transmission of the content based on the news gathering route information and the action history information and records the network discerned in the news gathering route information, and
   the determination unit determines the form of the content based on the information of the network recorded in the news gathering route information.
(16) The information processing device according to any one of (1) to (15),
   wherein the content is a video, and
   the determination unit determines the form of the content from among a plurality of video forms having mutually different information amounts per unit time.
(17) The information processing device according to (16),
   wherein the plurality of video forms includes a plurality of video formats in which at least one of maximum bit rates, resolutions, codecs, or maximum frame rates are different.
(18) An information processing method comprising:
   performing discerning related to wireless communication used for transmission of content based on action schedule information related to generation of the content and service area information regarding the wireless communication; and
   determining a form of the content based on a result of the discerning.

### Reference Signs List

1 IMAGING SYSTEM
10 SERVER
20 EDITING DEVICE
30 IMAGING DEVICE
40 TERMINAL DEVICE
11, 21, 31, 41 COMMUNICATION UNIT
12, 22, 32, 42 STORAGE UNIT
13, 23, 33, 43 CONTROL UNIT
24, 34, 44 INPUT UNIT
25, 35, 45 OUTPUT UNIT
36, 46 SENSOR UNIT
37, 47 IMAGING UNIT
331 ACQUISITION UNIT
332 DISCERNING UNIT
333 DETERMINATION UNIT
334 COMMUNICATION CONTROL UNIT
N NETWORK

## Claims

1. An information processing device comprising:
a discerning unit that performs discerning related to wireless communication used for transmission of content based on action schedule information related to generation of the content and service area information regarding the wireless communication; and
a determination unit that determines a form of the content based on a result of the discerning.

2. The information processing device according to claim 1,
wherein the discerning unit discerns a network to be used for transmission of the content from among a plurality of networks corresponding to mutually different radio access technologies based on the action schedule information and the service area information, and
the determination unit determines the form of the content based on information regarding the network discerned.

3. The information processing device according to claim 2,
wherein the determination unit determines the form of the content based on the information regarding the network discerned and information regarding a communication state of the network.

4. The information processing device according to claim 2,
wherein the action schedule information is news gathering plan information including information regarding a location and time related to news gathering, and
the discerning unit discerns the network to be used for transmission of the content based on the news gathering plan information and the service area information.

5. The information processing device according to claim 4,
wherein the service area information is a service area map of the plurality of networks,
the discerning unit discerns the network to be used for transmission of the content based on the news gathering plan information and the service area map, and
the determination unit determines the form of the content based on the information regarding the network discerned.

6. The information processing device according to claim 5,
wherein the discerning unit discerns the network to be used for transmission of the content based on the news gathering plan information, the service area map, and current position information obtained by a global navigation satellite system (GNSS) sensor.

7. The information processing device according to claim 5,
wherein the discerning unit, before the news gathering, discerns the network to be used for transmission of the content based on the news gathering plan information and the service area map and records the network discerned in the news gathering plan information, and
the determination unit determines the form of the content based on the information of the network recorded in the news gathering plan information.

8. The information processing device according to claim 4,
wherein the service area information is action history information capable of specifying a place where at least one of the plurality of networks has been used,
the discerning unit discerns the network to be used for transmission of the content based on the news gathering plan information and the action history information, and
the determination unit determines the form of the content based on the information regarding the network discerned.

9. The information processing device according to claim 8,
wherein the discerning unit performs, before the news gathering, discerns the network to be used for transmission of the content based on the news gathering plan information and the action history information and records the network discerned in the news gathering plan information, and
the determination unit determines the form of the content based on the information of the network recorded in the news gathering plan information.

10. The information processing device according to claim 2,
the action schedule information is news gathering route information including information regarding a route related to news gathering, and
the discerning unit discerns the network to be used for transmission of the content based on the news gathering route information and the service area information.

11. The information processing device according to claim 10,
wherein the service area information is a service area map of the plurality of networks,
the discerning unit discerns the network to be used for transmission of the content based on the news gathering route information and the service area map, and
the determination unit determines the form of the content based on the information regarding the network discerned.

12. The information processing device according to claim 11,
wherein the discerning unit discerns the network to be used for transmission of the content based on the news gathering route information, the service area map, and current position information obtained by a global navigation satellite system (GNSS) sensor.

13. The information processing device according to claim 11,
wherein the discerning unit, before the news gathering, discerns the network to be used for transmission of the content based on the news gathering route information and the service area map and records the network discerned in the news gathering route information, and
the determination unit determines the form of the content based on the information of the network recorded in the news gathering route information.

14. The information processing device according to claim 10,
wherein the service area information is action history information capable of specifying a place where at least one of the plurality of networks has been used,
the discerning unit discerns the network to be used for transmission of the content based on the news gathering route information and the action history information, and
the determination unit determines the form of the content based on the information regarding the network discerned.

15. The information processing device according to claim 14,
wherein the discerning unit performs, before the news gathering, discerns the network to be used for transmission of the content based on the news gathering route information and the action history information and records the network discerned in the news gathering route information, and
the determination unit determines the form of the content based on the information of the network recorded in the news gathering route information.

16. The information processing device according to claim 1,
wherein the content is a video, and
the determination unit determines the form of the content from among a plurality of video forms having mutually different information amounts per unit time.

17. The information processing device according to claim 16,
wherein the plurality of video forms includes a plurality of video formats in which at least one of maximum bit rates, resolutions, codecs, or maximum frame rates are different.

18. An information processing method comprising:
performing discerning related to wireless communication used for transmission of content based on action schedule information related to generation of the content and service area information regarding the wireless communication; and
determining a form of the content based on a result of the discerning.
